# FASCICULE DE BREVET EUROPEEN

(11) **EP 2 282 076 B1**
(45) Date de publication et mention de la délivrance du brevet: **18.01.2012**
(21) Numéro de dépôt: 10170748.7
(22) Date de dépôt: 26.07.2010
(51) Int. Cl.: F16F 1/387, F16F 13/14, F16F 13/10, F16F 1/38

(54) **Dispositif de liaison antivibratoire pour véhicule et véhicule comportant un tel dispositif**
Schwingungsdämpfervorrichtung für ein Fahrzeug, und eine solche Vorrichtung umfassendes Fahrzeug
Anti-vibration device for a vehicle and vehicle including such a device

(30) Priorité: 03.08.2009 FR 0955453
(43) Date de publication de la demande: 09.02.2011
(73) Titulaire: HUTCHINSON, 75008 Paris (FR)
(72) Inventeur: Jonnard, Daniel, 41100 SAINT-OUEN (FR); Chenais, Gilles, 28200 MARBOUE (FR); Aazizou, Khalid, 28200 LA CHAPELLE DU NOYER (FR); Clouet, Vincent, 28200 CONIE MOLITARD (FR)
(74) Mandataire: Cabinet Plasseraud

(56) Documents cités:
- EP-A- 0 199 240
- EP-A- 1 816 371
- WO-A-2008/152284
- FR-A- 2 830 911
- GB-A- 2 010 438

## Description

La présente invention est relative aux dispositifs de liaison antivibratoires pour véhicules (destinés notamment à relier le bloc motopropulseur d'un véhicule automobile à la caisse de ce véhicule) et aux véhicules comportant de tels supports.

Plus particulièrement, l'invention concerne un dispositif de liaison antivibratoire pour véhicule, comprenant :
- une première armature rigide,
- une deuxième armature rigide entourant au moins partiellement la première armature (cette deuxième armature peut être constituée en une pièce ou en plusieurs pièces solidarisables les unes avec les autres),
- un corps en élastomère comportant une partie de liaison reliant les première et deuxième armatures et adaptée pour permettre des débattements relatifs de la première armature par rapport à la deuxième armature au moins selon des premier et deuxième axes perpendiculaires entre eux,
la première armature étant solidaire de deux butées en élastomère qui s'étendent à l'opposé l'une de l'autre selon le deuxième axe depuis ladite première armature, lesdites butées en élastomère comprenant respectivement des faces de butée qui sont orientées vers l'extérieur selon le deuxième axe et qui sont disposées en regard de deux faces de contrebutée intérieures opposées appartenant à la deuxième armature, pour limiter les débattements relatifs de la première armature par rapport à la deuxième armature selon le deuxième axe, lesdites faces de contrebutée étant métalliques.

Le document WO-A-2008/152284 décrit un exemple d'un tel dispositif antivibratoire.

Dans les dispositifs antivibratoires connus de ce type, les butées en élastomère entrent régulièrement en contact avec les faces de contrebutée de la deuxième armature puis se séparent de ces faces de contrebutée. Chacune de ces séparations entre l'élastomère des butées et le métal des faces de contrebutée, génère des excitations riches en fréquences qui peuvent provoquer des bruits dans l'habitacle contribuant à dégrader le confort acoustique du véhicule.

La présente invention a notamment pour but de pallier cet inconvénient.

A cet effet, selon l'invention, un dispositif de liaison antivibratoire du genre en question est caractérisé en ce que les butées en élastomère sont comprimées selon le deuxième axe entre les deux faces de contrebutée de la deuxième armature,
en ce qu'au moins une desdites butées en élastomère présente au moins une alvéole interposée entre la première armature et la face de butée de ladite butée en élastomère, à distance de la première armature et de la face de butée de ladite butée en élastomère,
et en ce que cette alvéole présente une épaisseur selon le deuxième axe qui est au plus égale à 70 % d'une épaisseur à vide présentée par ladite alvéole lorsque ladite butée n'est pas comprimée selon le deuxième axe.

Grâce à ces dispositions, les butées en élastomères restent normalement en contact permanent avec les faces de contrebutée de la deuxième armature, ce qui évite les bruits générés par les contacts et séparation entre lesdites butées et les faces de contrebutée de la deuxième armature. Ces contacts et séparations sont reportés au sein de la ou chaque butée en élastomère dotée d'une alvéole, puisque la limitation de débattement de la première armature se traduit alors par des fermetures et ouvertures alternées de ladite alvéole. On évite ainsi les bruits liés à la séparation élastomère/métal, et on améliore donc le confort acoustique du véhicule.

Par ailleurs, du fait que les butées en élastomère sont disposées à l'opposé l'une de l'autre et s'équilibrent l'une l'autre sous l'effet de la compression exercée par la deuxième armature, leur compression ne génère pas d'effort statique sensible dans la partie de liaison du corps en élastomère, ce qui évite donc de perturber le bon fonctionnement du corps en élastomère vis-à-vis de l'amortissement de vibrations entre les première et deuxième armatures.

On notera que dans certains cas, notamment lorsque les butées en élastomère doivent reprendre des efforts très différents l'une de l'autre (correspondant par exemple pour l'une, aux accélérations du véhicule et pour l'autre, aux décélérations du véhicule), il est possible de prévoir une alvéole sur une seule des butées en élastomère tout en obtenant le résultat souhaité.

Dans divers modes de réalisation du dispositif antivibratoire selon l'invention, on peut éventuellement avoir recours en outre à l'une et/ou à l'autre des dispositions suivante :
- chacune desdites butées en élastomère présente au moins une alvéole interposée entre la première armature et la face de butée de ladite butée en élastomère, à distance de la première armature et de la face de butée de ladite butée en élastomère, et cette alvéole présente une épaisseur selon le deuxième axe qui est au plus égale à 50 % de l'épaisseur à vide présentée par ladite alvéole lorsque ladite butée n'est pas comprimée selon le deuxième axe : cette configuration permet d'éviter très efficacement tout décollement entre les butées en élastomère et les faces de contrebutée de la deuxième armature, pour des efforts normaux selon le deuxième axe ;
- ladite alvéole présente une forme de fente aplatie s'étendant sensiblement perpendiculairement au deuxième axe, selon une certaine largeur, entre deux extrémités fermées d'épaisseur élargie ;
- ladite alvéole s'étend perpendiculairement au deuxième axe et perpendiculairement à ladite largeur, jusqu'à au moins une extrémité ouverte ;
- les butées en élastomère sont formées d'une seule pièce avec le corps en élastomère ;
- la partie de liaison du corps en élastomère est adaptée pour supporter une charge selon le premier axe et la deuxième armature comporte un capot limiteur métallique en forme d'étrier enjambant la première armature et étant adapté pour limiter des débattements de la première armature au moins selon les premier et deuxième axes, ledit capot limiteur présentant une surface intérieure qui inclut lesdites faces de contrebutée ;
- la partie de liaison du corps en élastomère est surmoulée et adhérisée sur les première et deuxième armatures ;
- la partie de liaison du corps en élastomère est surmoulée et adhérisée sur la première armature et emboîtée à force dans la deuxième armature ;
- la partie de liaison du corps en élastomère présente une forme divergente entre un sommet surmoulé et adhérisé sur la première armature et une base surmoulée et adhérisée sur une embase appartenant à la deuxième armature et solidaire du capot limiteur ;
- le dispositif de liaison antivibratoire est une bielle de reprise de couple comportant deux articulations reliées entre elles par un corps rigide, l'une des deux articulations comportant la première armature, le corps de la bielle s'étendant longitudinalement selon le deuxième axe et la partie de liaison du corps en élastomère comportant deux bras qui s'étendent sensiblement transversalement par rapport au deuxième axe de part et d'autre de la première armature ;
- la partie de liaison du corps en élastomère est surmoulée et adhérisée sur les première et deuxième armatures.

Par ailleurs, l'invention a également pour objet un véhicule automobile comportant une caisse et un bloc motopropulseur relié à la caisse par au moins un dispositif de liaison antivibratoire tel que défini ci-dessus, qui est monté de façon que le bloc motopropulseur provoque des débattements relatifs de la première armature par rapport à la deuxième armature selon le deuxième axe lors des accélérations et décélérations du véhicule.

D'autres caractéristiques et avantages de l'invention apparaîtront au cours de la description suivante de deux de ses modes de réalisation, donnés à titre d'exemples non limitatif, en regard des dessins joints.

Sur les dessins :
- la figure 1 est une vue schématique montrant un véhicule automobile dont le bloc motopropulseur est relié à la caisse par un ou plusieurs dispositifs de liaison antivibratoires selon l'invention, par exemple au moins un support antivibratoire qui supporte le bloc motopropulseur et au moins une bielle de reprise de couple,
- la figure 2 est une vue écorchée en perspective d'un support antivibratoire selon une première forme de réalisation de l'invention,
- les figures 3 et 4 sont des vues en coupe respectivement selon les lignes III-III et IV-IV de la figure 2,
- la figure 5 est une vue similaire à la figure 2, montrant le support antivibratoire de la figure 2 sans son capot limiteur,
- la figure 6 est une vue en coupe selon la ligne VI-VI de la figure 5,
- la figure 7 est une vue latérale d'une bielle de reprise de couple selon une deuxième forme de réalisation de l'invention,
- et les figures 8 et 9 sont des vues en coupe de la bielle de reprise de couple de la figure 7, prises respectivement selon les lignes VIII-IX de la figure 7.

Sur les différentes figures, les mêmes références désignent des éléments identiques ou similaires.

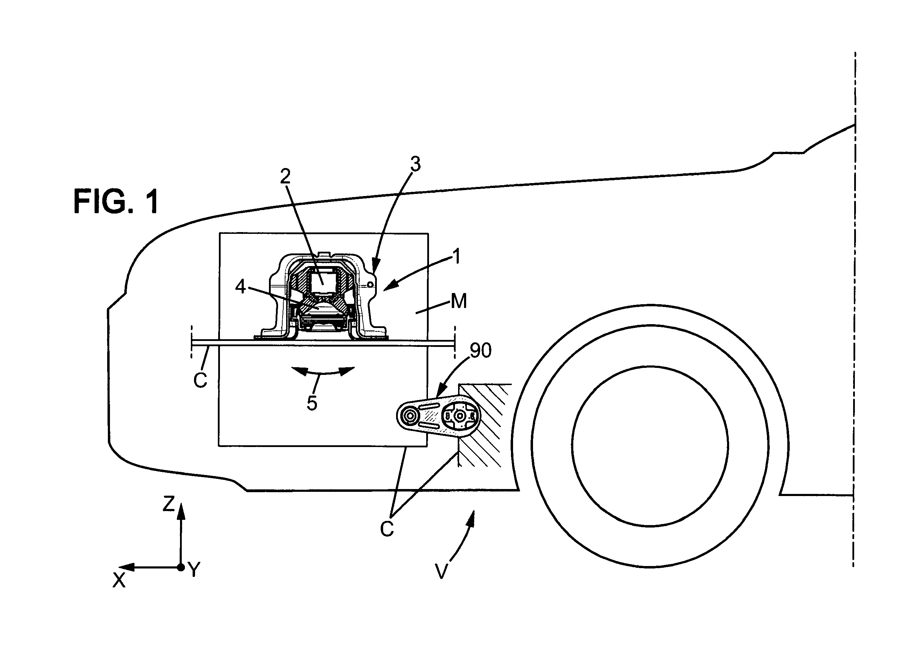

La figure 1 représente un véhicule automobile V comportant une caisse C dans laquelle est monté un bloc motopropulseur M. Le bloc motopropulseur M peut par exemple être monté dans la caisse C par une suspension pendulaire, comprenant notamment deux supports antivibratoires 1 qui peuvent être sensiblement alignés selon l'axe transversal horizontal Y du véhicule et sur lesquels est suspendu le bloc motopropulseur M.

Plus précisément, le bloc motopropulseur peut être fixé à une première armature rigide 2 de chacun des supports antivibratoires 1, cette première armature 2 étant entourée au moins partiellement par une deuxième armature rigide 3 reliée à la première armature 2 par un corps en élastomère 4 souple, réalisé par exemple en caoutchouc. La deuxième armature 3 est fixée à la caisse C du véhicule.

Lors des accélérations et décélérations du véhicule, le bloc motopropulseur M tend à osciller autour de l'axe transversal Y, selon la direction de la double flèche 5. Pour limiter ces oscillations, le bloc motopropulseur M est en outre relié à la caisse C du véhicule par au moins une bielle de reprise de couple 90 s'étendant sensiblement dans l'axe longitudinal horizontal X du véhicule dans l'exemple représenté.

Les supports antivibratoires 1 et la bielle de reprise de couple 90 peuvent être réalisés conformément à l'invention et vont être décrits plus en détail ci-après.

Bien entendu, le véhicule V pourrait comporter certains de ses dispositifs de liaison antivibratoires 1, 90 réalisés conformément à l'invention et d'autres non, sans pour autant sortir du cadre de l'invention : par exemple, la bielle de reprise de couple 90 pourrait être autre que celle décrite ci-après, où le ou les supports antivibratoires 1 pourraient être réalisés différemment de celui décrit ci-après.

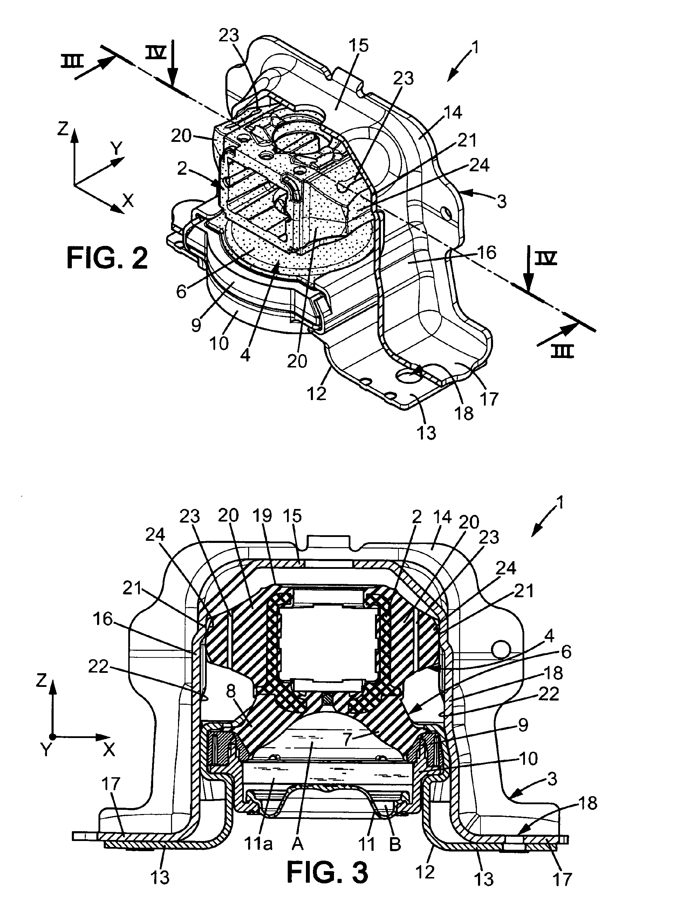

L'un des supports antivibratoires 1 est représenté sur les figures 2 à 4.

La première armature 2 de ce support antivibratoire peut par exemple être une armature métallique tubulaire s'étendant selon l'axe transversal Y du véhicule.

Sur cette première armature 2 est surmoulé et adhérisé le corps en élastomère 4 susmentionné, qui comporte une partie de liaison 6 de forme sensiblement conique, s'étendant en divergeant vers le bas depuis un sommet 7 (voir la figure 3) solidaire de la première armature 2 jusqu'à une base annulaire 8 surmoulée et adhérisée sur une embase annulaire 9 appartenant à la deuxième armature 3.

L'embase 9 est une pièce rigide qui peut être réalisée en métal ou en matière plastique. Dans l'exemple représenté sur la figure 3, l'embase 9 est une pièce en matière plastique qui est solidarisée par soudure avec une bague complémentaire 10 qui est elle-même solidarisée avec un soufflet en élastomère 11. La partie de liaison 6 du corps en élastomère, la bague 10 et le soufflet 11 peuvent délimiter entre eux un espace fermé rempli de liquide qui est subdivisé par une cloison rigide 11a en une chambre de travail A disposée du côté du corps en élastomère 4 et une chambre de compensation B disposée du côté du soufflet 11.

La cloison 11a, qui n'est pas représentée coupée sur la figure 3 pour plus de simplicité, inclut classiquement un passage étranglé (non représenté) permettant des transferts de liquide entre les chambres A, B pour amortir les mouvements vibratoire de la première armature 2 qui sont de relativement grande amplitude et de relativement basse fréquence, et cette cloison 11a peut inclure également un clapet de découplage (non représenté) permettant d'absorber des vibrations de faible amplitude et de relativement grande fréquence, de façon connue en soi.

Dans l'exemple considéré ici, la deuxième armature 3 comporte, en plus de l'embase 9 et de la bague 10 :
- un piètement métallique 12 qui est peut être par exemple serti sur l'embase 9 et la bague 10 et qui comporte des pattes horizontales 13 s'étendant de part et d'autre du support 1 selon l'axe longitudinal X du véhicule,
- et un capot limiteur métallique 14 en forme d'étrier, qui entoure la première armature 2 et le corps en élastomère 4 vers le haut et latéralement dans la direction X.

Le capot limiteur 14 présente une forme générale de U avec une paroi supérieure 15 sensiblement horizontale, deux ailes latérales 16 encadrant la première armature 2 et le corps en élastomère 4 selon l'axe longitudinal X, ces deux ailes latérales 16 étant prolongées latéralement vers l'extérieur par deux pattes de fixation horizontales 17 venant recouvrir les pattes horizontales 13 du piètement 12.

Les pattes horizontales 17, 13 peuvent être percées de trous 18 qui permettent la fixation desdites pattes 13, 17, sur la caisse du véhicule au moyen de vis ou boulons.

La partie de liaison 6 du corps en élastomère est adaptée pour supporter la charge statique représentée par le poids du bloc motopropulseur M du véhicule, et permet en outre des débattements de la première armature 2 par rapport à la deuxième armature 3 selon les trois axes X, Y, Z, principalement selon l'axe vertical Z et selon l'axe horizontal longitudinal du véhicule X.

Ces débattements relatifs de la première armature 2 par rapport à la deuxième armature 3 sont limités par le capot limiteur 14, dont la paroi supérieure 15 sert de butée pour la première armature 2, ladite première armature 2 étant recouverte vers le haut par un bourrelet d'élastomère 19 appartenant au corps en élastomère 4, qui amortit les contacts entre ladite première armature et la paroi supérieure 15 du capot limiteur.

De plus, le corps en élastomère 4 comporte en outre deux butées en élastomère 20, moulées d'une seule pièce avec la partie de liaison 6 dudit corps en élastomère, qui s'étendent dans des directions opposées de part et d'autre de la première armature 2, en regard de deux faces de contrebutée métallique 21 appartenant à la surface intérieure 22 des ailes latérales 16 du capot limiteur.

Les deux butées en élastomère 20 sont comprimées selon l'axe longitudinal X entre les deux faces de contrebutée 21 du capot limiteur, et lesdites deux butées en élastomère 20 présentent chacune au moins une alvéole 23 disposée entre la première armature 2 et la face de butée externe 24 de ladite butée en élastomère 20, dans l'épaisseur de la butée.

Eventuellement, seule une des deux butées en élastomère 20 pourrait être dotée d'une alvéole 23.

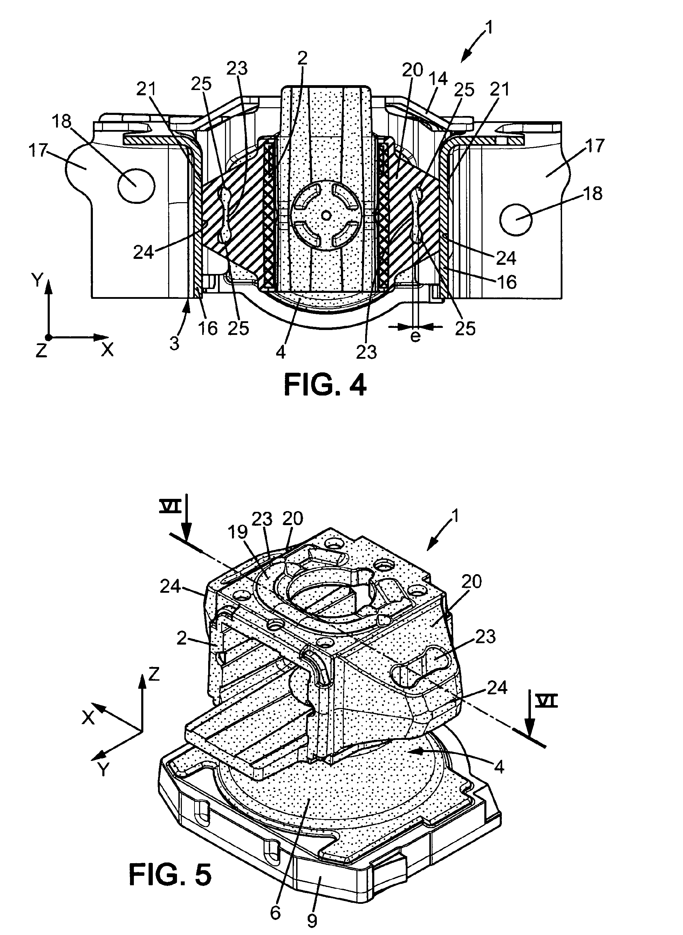

Les alvéoles 23 peuvent par exemple se présenter sous la forme de fentes s'étendant longitudinalement entre deux extrémités ouvertes selon l'axe vertical Z et s'étendant transversalement entre deux extrémités fermées 25 selon l'axe transversal Y (voir la figure 4).

Comme représenté sur la figure 4, les alvéoles 23 peuvent avoir une section "en os de chien", c'est-à-dire que les extrémités fermées 25 des alvéoles peuvent présenter une épaisseur supérieure à l'épaisseur de la partie centrale e des alvéoles dans la direction longitudinale X. Les extrémités fermées 25 présentent ainsi un rayon de courbure relativement grand, qui diminue les contraintes mécaniques au niveau desdites extrémités fermées 25.

On notera que les alvéoles 23 pourraient éventuellement comporter une seule extrémité ouverte au lieu de deux, et pourraient éventuellement s'étendre longitudinalement entre deux extrémités ouvertes ou depuis au moins une extrémité ouverte selon l'axe transversal Y au lieu de s'étendre longitudinalement selon l'axe vertical Z.

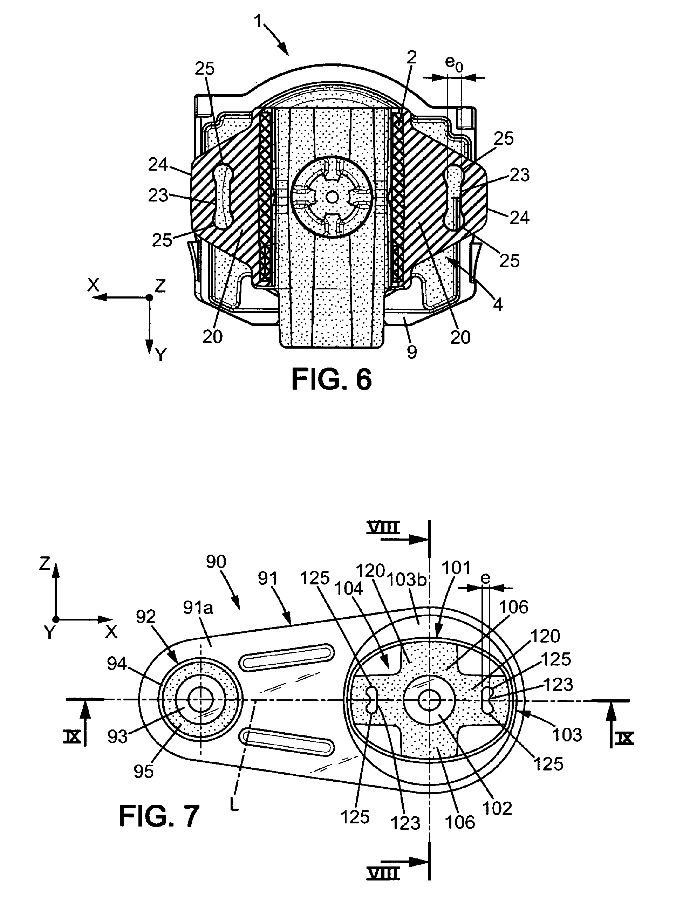

Comme représenté sur les figures 5 et 6, lorsque le corps en élastomère 4 est à l'état libre, c'est-à-dire avant mise en place du capot limiteur 14 qui comprime les butées 20 l'une vers l'autre, les alvéoles 23 présentent une épaisseur à vide e₀ dans leur partie centrale, cette épaisseur à vide e₀ étant supérieure à l'épaisseur e des alvéoles 23 dans leur partie centrale lorsque le dispositif antivibratoire 1 est assemblé.

L'épaisseur e après montage est généralement au plus égale à 70% de l'épaisseur à vide e₀ et de préférence, ladite épaisseur e après montage est au plus égale à la moitié de l'épaisseur à vide e₀. Ainsi, lorsque la première armature 2 subit des débattements horizontaux selon l'axe longitudinal X du fait des accélérations et décélérations du véhicule, ces débattements se traduisent par des fermetures et ouvertures alternées des alvéoles 23 et deux butées 20, sans que les faces de butée 24 de ces butées en élastomère ne se décollent des faces de contrebutée métalliques 21. On évite ainsi la génération d'excitations vibratoires riches en fréquence, qui sont susceptibles de générer des bruits dans l'habitacle du véhicule et donc de nuire au confort acoustique du véhicule. Les ouvertures et fermetures des alvéoles 23 ne génèrent pas d'excitations vibratoires similaires et ne provoquent donc pas de bruits perceptibles par les occupants de l'habitacle du véhicule.

Comme représenté sur les figures 7 à 9, la bielle de reprise de couple 90 quant à elle, peut comporter un corps métallique rigide 91 qui relie entre elles deux articulations 92, 101.

Le corps 91 de la bielle s'étend selon une direction longitudinale L qui peut par exemple être parallèle à l'axe longitudinal X du véhicule.

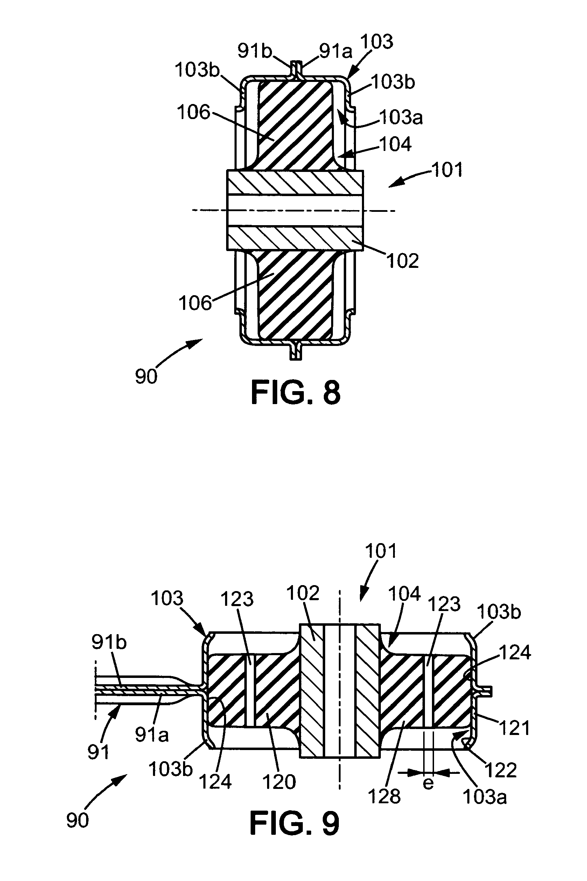

Comme on peut le voir plus en détail sur les figures 8 et 9, le corps 91 de la bielle peut par exemple être réalisé en deux pièces de tôle 91a, 91b qui sont assemblées l'une à l'autre par soudage ou autre et qui forment deux ouvertures sensiblement circulaires dans lesquelles sont fixées les articulations 92, 101. L'ouverture dans laquelle est logée l'articulation 101 est délimitée par une couronne 103 appartenant au corps 91 de la bielle, cette couronne formant une gorge 103a de forme sensiblement circulaire et ouverte radialement vers l'intérieur, cette gorge étant délimitée latéralement par deux rebords 103b appartenant à ladite couronne.

La première articulation 92 peut par exemple comporter :
- une armature intérieure métallique tubulaire 93 rigide de forme générale cylindrique, centrée sur un axe central parallèle à l'axe transversal Y,
- une armature métallique extérieure annulaire 94, également cylindrique, entourant l'armature intérieure 93 et emmanchée à force dans le corps 91 de la bielle, les armatures 93, 94 étant reliées entre elles par une bague souple en élastomère 95, réalisée par exemple en caoutchouc, qui est surmoulé et adhérisé sur les armatures 93, 94.

La deuxième articulation 101 de la bielle de reprise de couple peut quant à elle, comporter :
- une armature métallique rigide intérieure tubulaire 102, destinée à être fixée par exemple à la caisse du véhicule C et centrée sur un axe central parallèle à l'axe transversal Y,
- un corps en élastomère souple 104 réalisé par exemple en caoutchouc, ce corps en élastomère 104 étant surmoulé et adhérisé sur l'armature intérieure 102 et comportant une partie de liaison formée par deux bras transversaux 106 qui s'étendent de part et d'autre de l'armature intérieure, par exemple selon l'axe vertical Z, jusqu'à des extrémités extérieures qui sont emboîtées à force dans la gorge 103a de la couronne 103, et qui sont en appui radial contre la surface intérieure radiale 122 de ladite gorge 103a.

L'articulation 101 est donc retenue dans la couronne 103 par ce simple emboîtement à force, et par la limitation latérale imposée par les rebords 103a de la couronne 103.

Le corps en élastomère 104 comporte en outre deux butées 120 qui s'étendent à l'opposé l'une de l'autre selon la direction longitudinale L de la bielle de reprise de couple (c'est-à-dire selon l'axe X dans l'exemple considéré ici), jusqu'à des extrémités respectives formant des faces de butée 124 qui sont disposées au contact de la surface intérieure 122 de la couronne 103. Les butées en élastomère 120 sont comprimées entre deux faces de contrebutée 121 formées par les parties correspondantes de la surface intérieure 122 de la couronne 103. De plus, chacune des butées en élastomère 120 peut comporter une alvéole 123 de forme identique ou similaire aux alvéoles 23 décrites précédemment.

Par exemple, les alvéoles 123 peuvent présenter une épaisseur e dans leur partie médiane et s'étendre selon l'axe vertical Z entre deux extrémités fermées 125 d'épaisseur supérieure à e, lesdites alvéoles s'étendant parallèlement à la direction transversale Y entre deux extrémités ouvertes qui débouchent hors du corps en élastomère.

Comme dans la première forme de réalisation de l'invention précédemment décrite, l'épaisseur e des alvéoles 123 est au plus égale à 70% d'une épaisseur à vide e₀ de l'alvéole 123, avant mise en place du corps en élastomère 104 dans l'armature extérieure 123. Avantageusement, l'épaisseur e est au plus égale à 50% de l'épaisseur e₀.

On obtient ainsi, avec la bielle de reprise de couple 90, les mêmes avantages que ceux précédemment décrits dans le support antivibratoire 1 lorsque les accélérations et décélérations du véhicules provoquent des débattements relatifs de l'armature intérieure 102 par rapport à l'armature extérieure 103 selon l'axe X.

## Revendications

1. Dispositif antivibratoire pour véhicule, comprenant :
- une première armature rigide (2 ; 102),
- une deuxième armature rigide (3 ; 103) entourant au moins partiellement la première armature (2 ; 102),
- un corps en élastomère (4 ; 104) comportant une partie de liaison (6 ; 106) reliant les première et deuxième armatures (2, 3 ; 102, 103) et adaptée pour permettre des débattements relatifs de la première armature (2 ; 102) par rapport à la deuxième armature (3 ; 103) au moins selon des premier et deuxième axes (Z, X) perpendiculaires entre eux,
la première armature étant solidaire de deux butées en élastomère (20 ; 102) qui s'étendent à l'opposé l'une de l'autre selon le deuxième axe (X) depuis ladite première armature (2 ; 102), lesdites butées en élastomère (20 ; 102) comprenant respectivement des faces de butée (24 ; 124) qui sont orientées vers l'extérieur selon le deuxième axe (X) et qui sont disposées en regard de deux faces de contrebutée (21 ; 121) intérieures opposées appartenant à la deuxième armature (3 ; 103), pour limiter les débattements relatifs de la première armature par rapport à la deuxième armature selon le deuxième axe (X), lesdites faces de contrebutée (21 ; 121) étant métalliques,
**caractérisé en ce que** les butées en élastomère (20 ; 120) sont comprimées selon le deuxième axe (X) entre les deux faces de contrebutée (21 ; 121) de la deuxième armature,
**en ce qu'**au moins une desdites butées en élastomère (20 ; 120) présente au moins une alvéole (23 ; 123) interposée entre la première armature (2 ; 102) et la face de butée (24 ; 124) de ladite butée en élastomère, à distance de la première armature et de la face de butée de ladite butée en élastomère,
et **en ce que** cette alvéole (23 ; 123) présente une épaisseur (e) selon le deuxième axe (X) qui est au plus égale à 70 % d'une épaisseur à vide (e₀) présentée par ladite alvéole lorsque ladite butée n'est pas comprimée selon le deuxième axe.

2. Dispositif selon la revendication 1, dans lequel chacune desdites butées (20 ; 120) en élastomère présente au moins une alvéole (23 ; 123) interposée entre la première armature (2 ; 102) et la face de butée (24 ; 124) de ladite butée en élastomère, à distance de la première armature et de la face de butée de ladite butée en élastomère, et cette alvéole (23 ; 123) présente une épaisseur (e) selon le deuxième axe qui est au plus égale à 50 % de l'épaisseur à vide (e₀) présentée par ladite alvéole lorsque ladite butée n'est pas comprimée selon le deuxième axe (X).

3. Dispositif selon la revendication 1 ou la revendication 2, dans lequel ladite alvéole (23 ; 123) présente une forme de fente aplatie s'étendant sensiblement perpendiculairement au deuxième axe (X), selon une certaine largeur, entre deux extrémités fermées (25 ; 125) d'épaisseur élargie.

4. Dispositif selon la revendication 3, dans lequel ladite alvéole (23 ; 123) s'étend perpendiculairement au deuxième axe et perpendiculairement à ladite largeur, jusqu'à au moins une extrémité ouverte.

5. Dispositif selon l'une quelconque des revendications précédentes, dans lequel les butées en élastomère (20 ; 120) sont formées d'une seule pièce avec le corps en élastomère (4 ; 104).

6. Dispositif selon l'une quelconque des revendications précédentes, dans lequel la partie de liaison (6) du corps en élastomère est surmoulée et adhérisée sur les première et deuxième armatures (2, 3).

7. Dispositif selon l'une quelconque des revendications 1 à 5, dans lequel la partie de liaison (106) du corps en élastomère est surmoulée et adhérisée sur la première armature et emboîtée à force dans la deuxième armature (103).

8. Dispositif selon l'une quelconque des revendications précédentes, dans lequel la partie de liaison (6) du corps en élastomère est adaptée pour supporter une charge selon le premier axe et la deuxième armature comporte un capot limiteur métallique (14) en forme d'étrier enjambant la première armature (2) et étant adapté pour limiter des débattements de la première armature (2) au moins selon les premier et deuxième axes (Z, X), ledit capot limiteur présentant une surface intérieure (22) qui inclut lesdites faces de contrebutée (21).

9. Dispositif selon la revendication 8, dans lequel la partie de liaison (6) du corps en élastomère présente une forme divergente entre un sommet (7) surmoulé et adhérisé sur la première armature (2) et une base (8) surmoulée et adhérisée sur une embase (9) appartenant à la deuxième armature (3) et solidaire du capot limiteur (14).

10. Dispositif selon l'une quelconque des revendications 1 à 7, formant une bielle de reprise de couple (90) comportant deux articulations (92, 101) reliées entre elles par un corps rigide (91), l'une des deux articulations (92, 101) comportant la première armature (102), le corps de la bielle (91) s'étendant longitudinalement selon le deuxième axe (X) et la partie de liaison (106) du corps en élastomère comportant deux bras qui s'étendent sensiblement transversalement par rapport au deuxième axe (X) de part et d'autre de la première armature (102).

11. Véhicule automobile comportant une caisse (C) et un bloc motopropulseur (M) relié à la caisse (C) par au moins un dispositif antivibratoire (1 ; 90) selon l'une quelconque des revendications précédentes, qui est monté de façon que le bloc motopropulseur (M) provoque des débattements relatifs de la première armature (2 ; 102) par rapport à la deuxième armature (3 ; 103) selon le deuxième axe (X) lors des accélérations et décélérations du véhicule.

## Claims

1. Anti-vibration device for a vehicle, comprising:
- a first rigid armature (2; 102),
- a second rigid armature (3; 103) at least partially surrounding the first armature (2; 102),
- an elastomer body (4; 104) comprising a connecting part (6; 106) connecting the first and second armatures (2, 3; 102, 103) and designed to allow relative travel of the first armature (2; 102) with respect to the second armature (3; 103) at least along first and second mutually perpendicular axes (Z, X),
the first armature being secured to two elastomer bump stops (20; 102) which extend opposite one another along the second axis (X) from the said first armature (2; 102), the said elastomer bump stops (20; 102) respectively comprising bump faces (24; 124) which face outwards along the second axis (X) and which are positioned facing two opposed internal mating bump faces (21; 121) belonging to the second armature (3; 103) to limit the relative travel of the first armature with respect to the second armature along the second axis (X), the said opposing bump faces (21; 121) being made of metal,
**characterized in that** the elastomer bump stops (20; 120) are compressed along the second axis (X) between the two mating bump faces (21; 121) of the second armature,
**in that** at least one of the said elastomer bump stops (20, 120) has at least one cavity (23; 123) interposed between the first armature (2; 102) and the bump face (24; 124) of the said elastomer bump stop, some distance from the first armature and from the bump face of the said elastomer bump stop,
and **in that** this cavity (23; 123) has a thickness (e) along the second axis (X) which is at most equal to 70% of a no-load thickness (e₀) that the said cavity has when the said bump stop is not compressed along the second axis.

2. Device according to Claim 1, in which each of the said elastomer bump stops (20; 120) has at least one cavity (23; 123) interposed between the first armature (2; 102) and the bump face (24; 124) of the said elastomer bump stop, some distance from the first armature and from the bump face of the said elastomer bump stop, and this cavity (23, 123) has a thickness (e) along the second axis which is at most equal to 50% of the no-load thickness (e₀) that the said cavity has when the said bump stop is not compressed along the second axis (X).

3. Device according to Claim 1 or Claim 2, in which the said cavity (23; 123) is in the shape of a flattened slit running substantially perpendicular to the second axis (X), along a certain width, between two closed ends (25; 125) of greater thickness.

4. Device according to Claim 3, in which the said cavity (23; 123) runs perpendicular to the second axis and perpendicular to the said width as far as at least one open end.

5. Device according to any one of the preceding claims, in which the elastomer bump stops (20; 120) are made as a single piece with the elastomer body (4; 104).

6. Device according to any one of the preceding claims, in which the connecting part (6) of the elastomer body is overmoulded onto and bonded to the first and second armatures (2, 3).

7. Device according to any one of Claims 1 to 5, in which the connecting part (106) of the elastomer body is overmoulded onto and bonded to the first armature and force-fitted into the second armature (103).

8. Device according to any one of the preceding claims, in which the connecting part (6) of the elastomer body is designed to withstand a load along the first axis and the second armature comprises a stirrup-shaped metal limit cap (14) straddling the first armature (2) and designed to limit the travel of the first armature (2), at least along the first and second axes (Z, X), the said limit cap having an interior surface (22) that includes the said mating bump stop faces (21).

9. Device according to Claim 8, in which the connecting part (6) of the elastomer body has a shape that diverges between a top (7) that is overmoulded onto and bonded to the first armature (2) and a base (8) that is overmoulded onto and bonded to a baseplate (9) belonging to the second armature (3) and secured to the limit cap (14).

10. Device according to any one of Claims 1 to 7, forming a torque rod (90) comprising two articulations (92, 101) joined together by a rigid body (91), one of the two articulations (92, 101) comprising the first armature (102), the body of the rod (91) extending longitudinally along the second axis (X) and the connecting part (106) of the elastomer body comprising two arms running substantially transversely to the second axis (X) on each side of the first armature (102).

11. Motor vehicle comprising a bodyshell (C) and a power unit (M) connected to the bodyshell (C) by at least one anti-vibration device (1; 90) according to any one of the preceding claims, which is mounted in such a way that the power unit (M) causes relative travel of the first armature (2; 102) with respect to the second armature (3; 103) along the second axis (X) when the vehicle accelerates and decelerates.

## Patentansprüche

1. Anti-Schwingungs-Einrichtung für ein Fahrzeug, umfassend:
- eine erste starre Armatur (2; 102),
- eine zweite starre Armatur (3; 103), welche die erste Armatur (2; 102) wenigstens teilweise umgibt,
- einen Elastomer-Körper (4; 104), der einen Verbindungsteil (6; 106) umfasst, welcher die erste und die zweite Armatur (2, 3; 102, 103) verbindet, und der dazu angepasst ist, relative Ausschläge der ersten Armatur (2; 102) in Bezug zu der zweiten Armatur (3; 103) wenigstens entlang von einer ersten und einer zweiten Achse (Z, X), die zueinander senkrecht sind, zu erlauben,
wobei die erste Armatur fest mit zwei Elastomer-Anschlägen (20; 102) verbunden ist, die sich einander gegenüber liegend entlang der zweiten Achse (X) von der ersten Armatur (2; 102) aus erstrecken, wobei die Elastomer-Anschläge (20; 102) jeweils Anschlagsflächen (24; 124) umfassen, die längs der zweiten Achse (X) nach außen orientiert sind und die gegenüber von zwei inneren, gegenüberliegenden Gegenanschlagsflächen (21; 121) angeordnet sind, die zu der zweiten Armatur (3; 103) gehören, um die relativen Ausschläge der ersten Armatur in Bezug auf die zweite Armatur längs der zweiten Achse (X) zu begrenzen, wobei die Gegenanschlagsflächen (21; 121) metallisch sind,
**dadurch gekennzeichnet, dass** die Elastomer-Anschläge (20; 120) längs der zweiten Achse (X) zwischen den zwei Gegenanschlagsflächen (21; 121) der zweiten Armatur zusammengedrückt sind, **dass** wenigstens einer der Elastomer-Anschläge (20; 120) wenigstens einen Hohlraum (23; 123) aufweist, der zwischen der ersten Armatur (2; 102) und der Anschlagsfläche (24; 124) vom dem Elastomer-Anschlag angeordnet ist, beabstandet von der ersten Armatur und von der Anschlagsfläche des Elastomer-Anschlags,
und **dass** dieser Hohlraum (23; 123) eine Dicke (e) längs der zweiten Achse (X) aufweist, die höchstens gleich 70 % einer Leer-Dicke (e₀) ist, welche der Hohlraum aufweist, wenn der Anschlag nicht längs der zweiten Achse zusammengedrückt ist.

2. Einrichtung nach Anspruch 1, wobei jeder von den Elastomer-Anschlägen (20; 120) wenigstens einen Hohlraum (23; 123) aufweist, der zwischen der ersten Armatur (2; 102) und der Anschlagsfläche (24; 124) vom dem Elastomer-Anschlag angeordnet ist, beabstandet von der ersten Armatur und von der Anschlagsfläche des Elastomer-Anschlags, und wobei der Hohlraum (23; 123) eine Dicke (e) längs der zweiten Achse aufweist, die höchstens gleich 50 % der Leer-Dicke (e₀) ist, welche der Hohlraum aufweist, wenn der Anschlag nicht längs der zweiten Achse (X) zusammengedrückt ist.

3. Einrichtung nach Anspruch 1 oder Anspruch 2,
wobei der Hohlraum (23; 123) eine Form eines abgeflachten Schlitzes aufweist, der sich im Wesentlichen senkrecht zu der zweiten Achse (X) erstreckt, über eine gewisse Breite, zwischen zwei geschlossenen Enden (25; 125) mit vergrößerter Dicke.

4. Einrichtung nach Anspruch 3,
wobei der Hohlraum (23; 123) sich senkrecht zu der zweiten Achse und senkrecht zu der Breite bis zu wenigstens einem offenen Ende erstreckt.

5. Einrichtung nach einem der vorhergehenden Ansprüche, wobei die Elastomer-Anschläge (20; 120) einstückig mit dem Elastomer-Körper (4; 104) ausgebildet sind.

6. Einrichtung nach einem der vorhergehenden Ansprüche, wobei der Verbindungsteil (6) des Elastomer-Körpers an der ersten und der zweiten Armatur (2, 3) aufgeformt und befestigt ist.

7. Einrichtung nach einem der Ansprüche 1 bis 5, wobei der Verbindungsteil (6) des Elastomer-Körpers an der ersten Armatur aufgeformt und befestigt ist und mit Kraft in die zweite Armatur (103) eingepasst ist.

8. Einrichtung nach einem der vorhergehenden Ansprüche, wobei der Verbindungsteil (6) des Elastomer-Körpers angepasst ist, um eine Belastung längs der ersten Achse abzustützen, und die zweite Armatur eine metallische Begrenzer-Abdeckung (14) umfasst, in Form eines Bügels, der die erste Armatur (2) überspannt und angepasst ist, um Ausschläge der ersten Armatur (2) wenigstens längs der ersten und der zweiten Achse (Z, X) zu begrenzen, wobei die Begrenzer-Abdeckung eine Innenfläche (22) aufweist, welche die Gegenanschlagsflächen (21) umfasst.

9. Einrichtung nach Anspruch 8, wobei der Verbindungsteil (6) des Elastomer-Körpers eine auseinander laufende Form aufweist, zwischen einer Spitze (7), die an der ersten Armatur (2) aufgeformt und befestigt ist, und einer Basis (8), die auf einem Unterteil (9) aufgeformt und befestigt ist, welches zu der zweiten Armatur (3) gehört und fest mit der Begrenzer-Abdeckung (14) verbunden ist.

10. Einrichtung nach einem der Ansprüche 1 bis 7, welche eine Drehmomentstütze (90) bildet, die zwei Gelenke (92, 101) umfasst, welche miteinander durch einen starren Körper (91) verbunden sind, wobei das eine der zwei Gelenke (92, 101) die erste Armatur (102) umfasst, der Körper der Stütze (91) sich longitudinal längs der zweiten Achse (X) erstreckt und der Verbindungsteil (106) des Elastomer-Körpers zwei Arme umfasst, die sich im Wesentlichen transversal bezüglich der zweiten Achse (X) zu beiden Seiten der ersten Armatur erstrecken.

11. Kraftfahrzeug, umfassend eine Karosserie (C) und einen Motorblock (M), der mit der Karosserie (C) durch wenigstens eine Anti-Schwingungs-Einrichtung (1, 90) nach einem der vorhergehenden Ansprüche verbunden ist, die derart angebracht ist, dass der Motorblock (M) relative Ausschläge der ersten Armatur (2; 102) in Bezug auf die zweite Armatur (3; 103) längs der zweiten Achse (X) bei Beschleunigungs- und Bremsvorgängen des Fahrzeugs hervorruft.
